(19) Europäisches Patentamt
European Patent Office
Office européen des brevets

(11) Publication number: **0 159 096 B1**

(12) **EUROPEAN PATENT SPECIFICATION**

(45) Date of publication of patent specification: **09.08.89**

(51) Int. Cl.[4]: **C 07 F 9/40,** A 01 N 57/20

(21) Application number: **85200568.5**

(22) Date of filing: **12.04.85**

(54) **S-(substituted allylic) trithiophosphonate insecticides.**

(30) Priority: **16.04.84 US 600675**
**16.04.84 US 600677**
**15.02.85 US 700730**

(43) Date of publication of application:
**23.10.85 Bulletin 85/43**

(45) Publication of the grant of the patent:
**09.08.89 Bulletin 89/32**

(84) Designated Contracting States:
**AT BE CH DE FR GB IT LI NL**

(56) References cited:
**EP-A-0 022 141**
**DE-A-2 246 759**

**CHEMICAL ABSTRACTS, vol. 69, no. 11, 9th September 1968, pages 4127-4128, abstract no. 43993t, Columbus, Ohio, US; E.A.**

**KRASIL'NIKOVA et al.: "Derivatives of phosphonous and phosphonic acids. XLIX. Reaction of dithioesters of alkylphosphonous acids with alkyl halides", & ZH. OBSHCH. KHIM. 1968, 38(3), 609-613**

(73) Proprietor: **STAUFFER CHEMICAL COMPANY**
**Westport Connecticut 06881 (US)**

(72) Inventor: **Chavdarian, Charles Garabed**
**2353 Minaret Drive**
**Martinez California 94553 (US)**
Inventor: **Heusinkveld, Valerie Frances**
**1919 Curtis Street, Apt. No. 3**
**Berkeley California 94702 (US)**
Inventor: **Abdel-Razak El-Nokaly, Magda**
**4147 Layona Court**
**Hamilton Ohio 45013 (US)**

(74) Representative: **Smulders, Theodorus A.H.J., Ir. et al**
**Vereenigde Octrooibureaux Nieuwe Parklaan 107**
**NL-2587 BP 's-Gravenhage (NL)**

(56) References cited:
**CHEMICAL ABSTRACTS, vol. 68, no. 19, 6th May 1968, page 6427, abstract no. 87345s, Columbus, Ohio, US; O.N. GRISHINA et al.: Alkylthionophosphonates. VII. Synthesis of mixed esters of alkyltrithiophosphonic acids", & ZH. OBSHCH. KHIM 1967, 37(10), 2276-2278**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 159 096 B1**

Courier Press, Leamington Spa, England.

## Description

Summary of the Invention

This invention relates to a compound having the formula

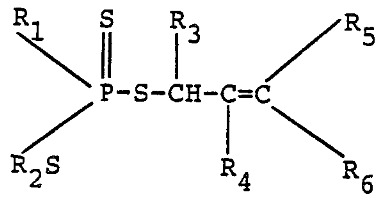

in which

$R_1$ is methyl or ethyl;

$R_2$ is $C_4$—$C_6$ branched alkyl or $C_5$—$C_6$ cycloalkyl;

$R_3$ is hydrogen, methyl or ethyl;

$R_4$ is hydrogen, $C_1$—$C_4$ alkyl, phenyl, halogen or halo-($C_1$—$C_4$ alkyl); and

$R_5$ and $R_6$ are hydrogen, halogen, $C_1$—$C_4$ alkyl or phenyl; or

$R_3$ and $R_5$ taken together form a trimethylene ring; provided that:

(a) if $R_3$, $R_5$ and $R_6$ are each hydrogen, then $R_4$ is not hydrogen;

(b) if $R_4$ is hydrogen, then $R_5$ and $R_6$ are not both $C_1$—$C_4$ alkyl; and

(c) if $R_4$ is halogen, then $R_5$ and $R_6$ are hydrogen, halogen or phenyl.

Said compounds are effective insecticides, and the invention consequently also relates to insecticidal compositions containing such compounds, and methods for controlling insects. Insecticidal dithiophosphomates have been described in US A 3884999 and US A 39047111.

The terms "halogen" or "halo" include chlorine, fluorine, bromine and iodine, preferably chlorine, fluorine and bromine.

When $R_3$ and $R_5$ are taken together to form a trimethylene group, the moiety attached to the sulfur atom is a cyclohexenyl or substituted cyclohexenyl group.

One preferred sub-generic class of the compounds of this invention has the formula

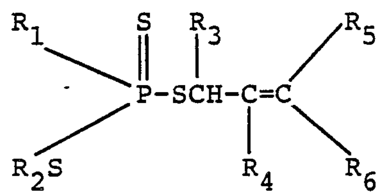

in which:

$R_1$ is methyl or ethyl;

$R_2$ is $C_4$—$C_6$ branched alkyl or $C_5$—$C_6$ cycloalkyl;

$R_3$ is hydrogen;

$R_4$ is $C_1$—$C_4$ alkyl, halogen or phenyl; and

$R_5$ and $R_6$ are hydrogen or halogen; or

$R_3$ and $R_5$ taken together form a trimethylene group, provided that if $R_4$ is halogen, then $R_5$ and $R_6$ are hydrogen, halogen or phenyl.

Most preferred of this subclass are those compounds in which $R_1$ is methyl or ethyl, $R_2$ is α,α-doubly branched $C_4$—$C_6$ alkyl such as tertiary butyl or 1,1-dimethylpropyl; $R_3$ is hydrogen; $R_4$ is $C_1$—$C_3$ alkyl (most preferably methyl) or halogen; and $R_5$ and $R_6$ are both hydrogen. Such compounds have the general formula

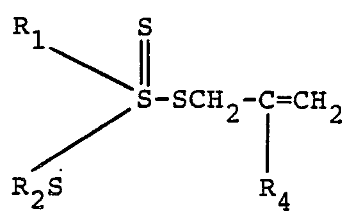

with $R_1$, $R_2$ and $R_4$ as just defined, and demonstrate excellent control of soil-borne insects. Some also show good foliar activity.

Another preferred sub-generic class of the compounds of this invention are those having the general formula

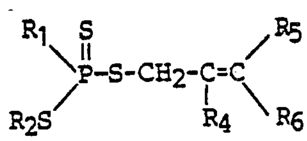

in which:

$R_1$ is methyl or ethyl;
$R_2$ is $C_4$—$C_6$ branched alkyl or $C_5$—$C_6$ cycloalkyl;
($R_3$ is hydrogen;)
$R_4$ is hydrogen, phenyl or halogen; and
$R_5$ and $R_6$ are $C_1$—$C_4$ alkyl, halogen, phenyl or hydrogen; provided that:
(a) if $R_3$, $R_5$ and $R_6$ are each hydrogen, then $R_4$ is not hydrogen,
(b) if $R_4$ is hydrogen, $R_5$ and $R_6$ are not both $C_1$—$C_4$ alkyl; and
(c) if $R_4$ is halogen, $R_5$ and $R_6$ are hydrogen, halogen or phenyl.

Most preferably in this subclass are those compounds in which $R_3$ and $R_4$ are hydrogen. Such compounds therefore have the general formula

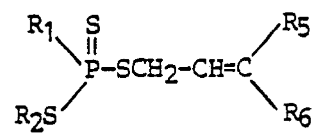

in which $R_1$ is methyl or ethyl; $R_2$ is $C_4$—$C_6$ branched alkyl or $C_5$—$C_6$ cycloalkyl; $R_5$ is halogen, phenyl, $C_1$—$C_4$ alkyl or hydrogen; and $R_6$ is halogen, phenyl or $C_1$—$C_4$ alkyl, provided that $R_5$ and $R_6$ are not both alkyl. These compounds generally demonstrate good insecticidal activity when applied to foliage but do not necessary demonstrate good control of insects in soil.

The term "insects" as used herein refers to the broad and commonly understood usage rather than to those creatures which in the strict biological sense are classified as insects, and includes, in addition to those belonging to the class *insecta*, some classes of acarids such as spiders, mites, ticks, and the like, particularly mites.

The compounds of the present invention may be prepared by a two step process.

In the first step the appropriate alkyl thionophosphine sulfide is reacted with two equivalents of a desired mercaptan in the presence of a base to produce a thioic acid salt, according to the equation:

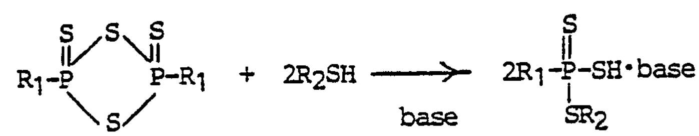


(1)

In the second step, the thioic acid salt is reacted with an appropriate allylic halide:

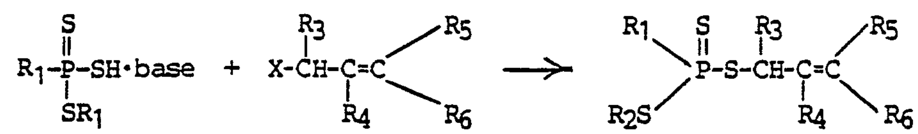

(2)

wherein $R_1$—$R_6$ are as defined above, and X stands for halogen, preferably chlorine or bromine, or alkyl- or arylsulfonate.

The starting material sulfides for Reaction 1 may be obtained for instance by the procedure described in P. E. Newallis et al., *Journal of Organic Chemistry*, 1962, Vol. 27, p. 3829.

Reaction 1 is advantageously carried out at a temperature of from about −40°C to about 150°C, preferably from about 0 to about 70°C, in an organic solvent in the presence of a base, preferably a tertiary amine. Suitable solvents include aromatic hydrocarbons such as benzene or toluene, ethers such as diethyl ether or tetrahydrofuran, and ketones such as acetone. Suitable tertiary amines include triethylamine, dimethylaniline, diethylaniline, and pyridine. Inorganic bases such as sodium hydroxide could be used in this step, but are less desirable as the resulting salts are less soluble in the solvents utilized. As the reaction is exothermic, the base is preferably added dropwise when operating on the laboratory scale. The product may be recovered by evaporating or distilling off the solvent.

Reaction 2 is conducted in an organic solvent such as that utilized in the first reaction, at a temperature of from about 20°C to about 130°C, preferably from about 20 to about 70°C. The allylic halide may be either a chloride or bromide. The product may be recovered by removing the precipitated salt, followed by evaporating or distilling off the solvent, and purification by either chromatography or distillation.

The following represent examples of the preparation of compounds of this invention.

Example 1

Preparation of S-t-Butyl S-(2-Methyl-1-propen-3-yl) Ethylphosphonotrithioate (Compound No. 1 herein)

(a.) To a slurry of 20.17 grams (g) (0.08 mole) of ethylthionophosphine sulfide in 125 milliliters (ml) of tetrahydrofuran, maintained under nitrogen and at room temperature was added 19.23 ml (15.37 g, 0.17 mole) of 2-methyl-2-propanethiol. To the resultant solution was added 23.8 ml (17.24 g, 0.1707 mole) of triethylamine dropwise and the reaction mixture was refluxed for 5 hours. After cooling, the mixture was

evaporated to produce 40.24 g (79% of theoretical yield) of a viscous oil, the triethylamine salt of S-t-butyl ethylphosphonotrithioic acid.

(b.) To a solution of 2.5 g (0.008 mole) of the triethylamine salt obtained in step (a), in 20 ml of tetrahydrofuran, maintained under nitrogen and at room temperature, was added dropwise a solution of 0.80 g (90% technical, 0.008 mole) of 3-chloro-2-methylpropene in 5 ml of tetrahydrofuran. The reaction mixture was refluxed for 8 hours. After cooling, 20 ml of water was added and the mixture was extracted with ether (3 × 20 ml). The ethereal layers were combined and washed with 20 ml of 5% aqueous sodium bicarbonate and 20 ml of saturated aqueous sodium chloride. The ethereal solution was dried with magnesium sulfate and evaporated to leave an oil. Purification was effected by a preparative, centrifugally accelerated, thin-layer (4 mm, silica gel) chromatograph, with 98:2 hexane-acetone as eluent to afford 1.42 g (67% of theoretical yield) of an oil, the title compound. The structure was confirmed by nuclear magnetic resonance mass and infrared spectroscopy.

Example 2

Preparation of S-t-Butyl S-(2-Bromo-1-propen-3-yl) Ethylphosphonotrithioate (Compound No. 5 herein)

Following the procedure of Example 1, step (b), the title compound (40% of theoretical yield) was prepared from the triethylamine salt of S-t-butyl ethylphosphonotrithioic acid [Example 1, step (a)] and 2,3-dibromo-1-propene. The structure was confirmed by spectroscopy as above.

The following Table I depicts representative compounds of this invention, which may be prepared by the process previously described. Structures of these compounds were confirmed by analysis as above.

With the exception of Compounds 28 and 29, the cis/trans isomerism of the compounds was not determined. The allocation of moieties between designations $R_5$ and $R_6$ has therefore been made arbitrarily; if the compound has but a single substituent at the 3-carbon atom, the substituent is listed in the $R_6$ column. The claims of this application are consequently intended to include both cis- and trans-isomers of the claimed compounds, as well as isomeric mixtures.

Similarly, when $R_3$ is alkyl the compounds may exist as optical isomers or as a racemic mixture due to the presence of an asymmetric carbon atom. Again, the claims are intended to cover the individual optical isomers as well as the racemic mixtures.

TABLE I

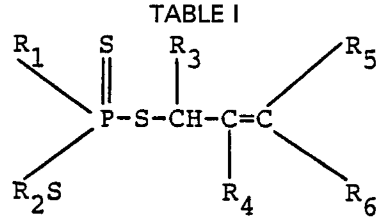

| Cmpd. No. | $R_1$ | $R_2$ | $R_3$ | $R_4$ | $R_5$ | $R_6$ | $n_D^{30}$ |
|---|---|---|---|---|---|---|---|
| 1 | $C_2H_5$ | t-$C_4H_9$ | H | $CH_3$ | H | H | 1.5740 |
| 2 | $C_2H_5$ | t-$C_4H_9$ | H | H | H | Cl | 1.5920 |
| 3 | $C_2H_5$ | t-$C_4H_9$ | H | H | H | $CH_3$ | 1.5718 |
| 4 | $CH_3$ | t-$C_4H_9$ | H | $CH_3$ | H | H | 1.5762 |
| 5 | $C_2H_5$ | t-$C_4H_9$ | H | Br | H | H | 1.5997 |
| 6 | $C_2H_5$ | t-$C_4H_9$ | | [cyclohexenyl] | | | 1.5904 |
| 7 | $CH_3$ | t-$C_4H_9$ | H | $CH_2Cl$ | H | H | 1.5911 |
| 8 | $CH_3$ | t-$C_4H_9$ | H | $CH_3$ | H | $CH_3$ | 1.5478 |
| 9 | $C_2H_5$ | t-$C_4H_9$ | H | i-$C_3H_7$ | H | H | viscous oil |
| 10 | $C_2H_5$ | t-$C_4H_9$ | H | Cl | H | H | 1.5845 |
| 11 | $CH_3$ | t-$C_4H_9$ | H | i-$C_3H_7$ | H | H | yellow oil |
| 12 | $C_2H_5$ | s-$C_4H_9$ | $C_2H_5$ | H | H | H | yellow oil |

TABLE I
(continued)

| Cmpd. No. | $R_1$ | $R_2$ | $R_3$ | $R_4$ | $R_5$ | $R_6$ | $nD^{30}$ |
|---|---|---|---|---|---|---|---|
| 13 | $CH_3$ | s-$C_4H_9$ | H | $CH_3$ | H | H | viscous oil |
| 14 | $C_2H_5$ | s-$C_4H_9$ | H | $CH_3$ | H | H | viscous oil |
| 15 | $CH_3$ | s-$C_4H_9$ | $C_2H_5$ | H | H | H | yellow oil |
| 16 | $CH_3$ | s-$C_4H_9$ | $CH_3$ | H | H | $CH_3$ | yellow oil |
| 17 | $C_2H_5$ | t-$C_4H_9$ | H | $CH_3$ | H | Cl | yellow oil |
| 18 | $C_2H_5$ | neopentyl | H | $CH_3$ | H | H | clear oil |
| 19 | $C_2H_5$ | t-$C_4H_9$ | H | H | H | $C_2H_5$ | clear oil |
| 20 | $C_2H_5$ | t-$C_4H_9$ | H | H | H | $C_6H_5$ | yellow oil |
| 21 | $CH_3$ | s-$C_4H_9$ | H | Cl | H | H | clear oil |
| 22 | $C_2H_5$ | s-$C_4H_9$ | H | Cl | H | H | clear oil |
| 23 | $C_2H_5$ | 1,2-dimethyl-propyl | H | $CH_3$ | H | H | viscous oil |
| 24 | $C_2H_5$ | t-$C_4H_9$ | H | Cl | H | Cl | 1.5879 |
| 25 | $C_2H_5$ | s-$C_4H_9$ | H | Cl | H | Cl | 1.5911 |
| 26 | $CH_3$ | t-$C_4H_9$ | H | Cl | Cl | Cl | 1.5830 |
| 27 | $C_2H_5$ | t-$C_4H_9$ | H | Cl | Cl | Cl | 1.5847 |
| 28 | $C_2H_5$ | t-$C_4H_9$ | H | H | n-$C_3H_7$ | H* | clear oil |
| 29 | $C_2H_5$ | t-$C_4H_9$ | H | H | H | n-$C_3H_7$** | clear oil |
| 30 | $C_2H_5$ | cyclohexyl | H | $CH_3$ | H | H | clear oil |
| 31 | $C_2H_5$ | cyclopentyl | H | Cl | H | H | clear oil |
| 32 | $C_2H_5$ | t-$C_4H_9$ | H | H | $CH_3$ | Cl | clear oil |
| 33 | $C_2H_5$ | 1,2-dimethyl-propyl | H | i-$C_3H_7$ | H | H | 1.5779 |
| 34 | $CH_3$ | s-$C_4H_9$ | H | i-$C_3H_7$ | H | H | 1.5813 |
| 35 | $C_2H_5$ | s-$C_4H_9$ | H | i-$C_3H_7$ | H | H | 1.5786 |
| 36 | $C_2H_5$ | cyclopentyl | H | $CH_3$ | H | H | 1.5788 |
| 37 | $C_2H_5$ | t-$C_4H_9$ | H | $C_2H_5$ | H | H | 1.5590 |
| 38 | $CH_3$ | t-$C_4H_9$ | H | Cl | H | H | 1.5862 |
| 39 | $CH_3$ | 1,1-dimethyl-propyl | H | Cl | H | H | 1.5891 |
| 40 | $CH_3$ | 1,1-dimethyl-propyl | H | $CH_3$ | H | H | 1.5774 |

TABLE I
(continued)

| Cmpd. No. | $R_1$ | $R_2$ | $R_3$ | $R_4$ | $R_5$ | $R_6$ | $nD^{30}$ |
|---|---|---|---|---|---|---|---|
| 41 | $C_2H_5$ | 1,1-dimethyl-propyl | H | Cl | H | H | 1.5870 |
| 42 | $C_2H_5$ | 1,1-dimethyl-propyl | H | $CH_3$ | H | H | 1.5740 |
| 43 | $CH_3$ | t-$C_4H_9$ | H | Cl | H | Cl | 1.5968 |
| 44 | $CH_3$ | t-$C_4H_9$ | H | H | H | $C_6H_5$ | 1.6322 |
| 45 | $CH_3$ | s-$C_4H_9$ | H | H | H | $C_6H_5$ | 1.6298 |
| 46 | $C_2H_5$ | s-$C_4H_9$ | H | H | Cl | Cl | 1.5784 |
| 47 | $C_2H_5$ | 2-methylbutyl | H | H | Cl | Cl | 1.5780 |
| 48 | $C_2H_5$ | t-$C_4H_9$ | H | H | Cl | Cl | 1.6001 |
| 49 | $C_2H_5$ | t-$C_4H_9$ | H | $C_6H_5$ | H | H | 1.6103 |
| 50 | $C_2H_5$ | t-$C_4H_9$ | H | F | H | H | 1.5702 |
| 51 | $CH_3$ | t-$C_4H_9$ | H | Cl | H | H | 1.5792 |
| 52 | $CH_3$ | t-$C_4H_9$ | H | $C_6H_5$ | H | H | 1.6156 |

* — cis-isomer ** — trans-isomer

Insecticidal Evaluation Tests

The compounds in Table I above were tested for insecticidal activity using the following testing procedures. LD—50 values, based on the results of these tests, and/or calculated according to dosage-mortality curves, are expressed in Table II.

*Housefly* [*Musca domestica*]:

(a.) *Contact*: Test compounds were diluted in acetone and aliquots pipetted onto the bottom of aluminum dishes. to ensure even spreading of the chemical on the bottom of the dishes, 1 ml of acetone containing 0.01% peanut oil was also added to each dish. After all solvents had evaporated, the dishes were placed in circular cardboard cages containing 25 female houseflies, 1—2 days old. The cages were covered on the bottom with cellophane and on the top with tulle netting, and each contained a sugar-water saturated cotton plug for maintenance of the flies. Mortality was recorded after 48 hours. Test levels ranged from 100 μg/25 female houseflies downward. The LD—50 values are expressed below in Table II under the heading "HF—C", in terms of μg of the test compound per 25 female flies.

(b.) *Fumigant*: Test compounds were diluted in acetone and aliquots pipetted onto 55 millimeter (mm) filter paper discs in the bottom of aluminum dishes. Immediately after the acetone had completely evaporated the dishes were placed in circular cardboard cages (volume — 285 ml) containing 25 female houseflies. The cages were sealed on both ends with cellophane and each contained a sugar-water saturated cotton plug for maintenance of the flies. A piece of netting was placed over the aluminum dish in the cage in such a way that the flies were unable to come into direct contact with the chemically treated filter paper. Mortality was recorded after 48 hours. Test levels ranged from 100 μg/25 female houseflies downward. The LD—50 values are expressed in the following Table II under the heading "HF—F", in terms of μg of the test compound per 25 female houseflies per 285 ml volume of the test container.

*Black Bean Aphid* [*Aphis fabae* (Scop.)]:

Nasturtium plants (*Tropaeolum sp.*) approximately 5 cm tall, were transplanted into sandy loam soil in small cups and infested with 25—50 black bean aphids of mixed ages. Twenty-four hours later they were sprayed to the point of runoff with 50—50 acetone-water solutions of the test compounds. Treated plants were held in the greenhouse and mortality was recorded after 48 hours. Test concentrations ranged from 0.05% downward. The LD—50 values are expressed below in Table II under the heading "BA—C" in terms of percent of the test compound in the sprayed solution.

*Tobacco Budworm* [*Heliothis virescens* (Fabricius)]:

(a) *Contact*: Test compounds were diluted in a 50—50 acetone-water solution. Cotton (*Gossypium sp.*) cotyledons were immersed in the test solutions for 2—3 seconds and placed on a wire screen to dry. The dried leaves were placed in petri dishes containing a moistened piece of filter paper and infested with 5 second-instar tobacco budworm larvae. The dishes were placed in a high humidity chamber for 5 days, and percent mortality of the larvae recorded. Test concentrations ranged from 0.1% downward. The LD—50 values are expressed below in Table II under the heading "TBW—C" in terms of percent of the test compound in the solution.

(b). *Eggs*: Paper towel patches of 2-day old eggs of the tobacco budworm were dipped in acetone solutions of the test compounds and placed in petri dishes containing a portion of larval rearing medium. Treated eggs were maintained at 78°F. and mortality was recorded after all control eggs had hatched and the young larvae were feeding on the media. Test concentrations ranged from 0.1% downward. The LD—50 values are expressed below in Table II under the heading "TBW—E" in terms of percent of the test compound in the solution.

*Beet Armyworm* (*Spodoptera exigua*):

Test compounds were diluted in a 50—50 acetone-water solution. Young leaves of sugar beets (*Beta vulgaris*) were immersed in the test solutions for 2—3 seconds and placed on a wire screen to dry. The dried leaves were placed in petri dishes containing a moistened filter paper and infested with five second-instar beet armyworm larvae. The dishes were placed in a high humidity chamber. Mortality of the larvae was recorded five days later. Test concentrations ranged from 0.1% downward. The LD—50 values are expressed below in Table II under the heading "BAW" in terms of percent of the test compound in solution.

*Cabbage Looper* [*Trichoplusia ni* (Hubner)]:

Test compounds were diluted in a 50—50 acetone-water solution. Cotyledons of hysini squash (*Calabacita abobrinha*), approximately 1 × 1.5 inches, were immersed in the test solutions for 2—3 seconds and placed on a wire screen to dry. The dried leaves were placed in petri dishes containing a moistened piece of filter paper and infested with 5 second- instar cabbage looper larvae. The dishes were placed in a high humidity chamber. Mortality of the larvae was recorded 5 days later. Test concentrations ranged from 0.1% downward. The LD—50 values are expressed below in Table II under the heading "CL" in terms of percent of the test compound in this solution.

*Western Spotted Cucumber Beetle Larvae* [*Diabrotica undecimpunctata undecimpunctata* (Mannherheim)]:

Ten grams of moist potting soil was placed in a plastic cup. Test compounds were dissolved in acetone or an other appropriate solvent. A 0.05 ml aliquot of the test sample, diluted to the desired concentration, was added to the soil. The cub was capped and the soil was mixed on a vortex mixer for approximately 15 seconds. An indentation was made on the surface of the soil and approximately 50 *Diabrotica* eggs were added. The eggs were covered with soil and maintained at room temperature (approximately 70°F. or 21°C.). Four days later a section of Romaine lettuce (*Latuca sativa*) leaf was placed in the treated cups. One week later the cups were examined for live larvae. Test concentrations ranged from 25 ppm downward. The LD—50 values are expressed below in Table II under the heading "Diabrotica" in terms of ppm of the test compound in the soil.

Acaricidal Evaluation Test

The two-spotted mite (2SM) [*Tetranychus urticae* (Koch)] was employed in test for miticides. The test procedure was as follows:

Pinto bean plants (*Phaseolus sp.*) approximately 10 cm tall, were transplanted into sandy loam soil in 3-inch clay pots and thoroughly infested with two-spotted mites of mixed ages and sexes. Twenty-four hours layer the infested plants were inverted and dipped for 2—3 seconds in 50—50 acetone-water solutions of the test compounds. Treated plants were held in the greenhouse, and 7 days later mortality was determined for both adult mites and the nymphs hatching from eggs which were on the plants at the time of treatment. Test concentrations ranged from 0.05% downward. The LD—50 values are expressed below in Table II under the headings "2SM—A" (i.e., adults) and "2SM—E" (i.e. eggs) in terms of percent concentration of the test compound in the solution.

Systemic Evaluation Test

This test evaluates the root absorption and upward translocation of the candidate systemic compound. The two-spotted mite (2SM) [*Tetranychus urticae* (Koch)] and the bean aphid (BA) [*Aphis fabae* (Scop.)] were employed in the test for systemic activity. Tests were conducted as follows:

*Two-Spotted Mite*:

Test compounds were dissolved in acetone and aliquots diluted in 200 ml of water in glass bottles. Two pinto bean plants (*Phaseolus sp.*), with expanded primary leaves, were supported in each bottle by cotton

plugs so that their roots and stems were immersed in the treated water. The plants were then infested with 75—100 two-spotted mites of various ages and sexes. One week later the mortality of the adult mites and nymphs was recorded. Test concentrations of the chemicals in the water ranged from 10 ppm downward. The LD—50 values are expressed in Table II under the heading "2—SM (S)" in terms of ppm of the test compound in the solution.

*Black Bean Aphid* [Aphis fabae (Scop.)]

Nasturtium plants (*Tropaeolum sp.*), approximately 5 cm tall, were transported into 400 grams of sandy loam soil in one pint containers. Test chemicals were dissolved in acetone and aliquots diluted in 50—60 ml of water. The treated water was poured onto the surface of the soil and allowed to thoroughly soak in. The treated plants were infested with 25—50 black bean aphids of mixed ages and held in the greenhouse. Mortality was recorded after three days. Test concentrations ranged from 10 ppm down to that at which 50% mortality occurs. The LD—50 values are expressed in Table II under the heading "BA(S)" in terms of ppm of the test compound in the solution.

TABLE II ($LD_{50}$)

| Cmpd. No. | HF, µg C | HF, µg F* | BA C, % | BA $S_t$ ppm | 2—SM A, % | 2—SM S, ppm | 2—SM E, % | TBW, % C | TBW, % E | BAW, % | CL, % | Diabrotica, ppm (soil) |
|---|---|---|---|---|---|---|---|---|---|---|---|---|
| 1 | 30 | 30 | 0.003 | — | 0.05 | — | 0.05 | 0.03 | 0.006 | 0.03 | 0.006 | 0.35 |
| 2 | 71 | — | 0.006 | 3 | 0.006 | — | 0.03 | 0.005 | <0.1 | — | — | 4 |
| 3 | 14 | — | 0.006 | 6 | 0.003 | — | 0.03 | >0.1 | >0.1 | >0.1 | — | 0.75 |
| 4 | 9 | 7 | 0.03 | 6 | 0.05 | — | >0.05 | 0.08 | 0.02 | 0.03 | 0.006 | 0.3 |
| 5 | 33 | — | 0.05 | — | >0.05 | — | >0.05 | 0.03 | 0.01 | 0.03 | 0.006 | 0.75 |
| 6 | 86 | — | 0.001 | 3 | 0.003 | — | >0.05 | 0.03 | 0.02 | 0.03 | 0.03 | 2 |
| 7 | >100 | — | 0.006 | — | 0.03 | — | >0.05 | 0.1 | 0.03 | — | — | 7.5 |
| 8 | 33 | 30 | 0.002 | 6 | 0.01 | — | >0.05 | 0.03 | 0.006 | 0.03 | 0.006 | 2 |
| 9 | 28 | 29 | 0.002 | — | 0.003 | — | 0.03 | 0.03 | 0.02 | 0.04 | 0.03 | 0.75 |
| 10 | 7.5 | 26 | 0.002 | 6 | 0.006 | — | >0.05 | 0.03 | 0.007 | 0.03 | 0.006 | 0.25 |
| 11 | <100 | — | <0.05 | — | >0.05 | — | >0.05 | — | — | — | — | <25 |
| 12 | <100 | — | 0.002 | 3 | 0.006 | — | 0.03 | — | 0.02 | — | — | 3 |
| 13 | 30 | 30 | 0.01 | 3 | 0.01 | — | >0.05 | 0.03 | 0.01 | 0.03 | 0.007 | 0.75 |
| 14 | 30 | 30 | 0.002 | 6 | 0.001 | — | 0.03 | 0.08 | 0.03 | 0.1 | 0.03 | 0.75 |
| 15 | <100 | — | 0.01 | 10 | 0.03 | — | 0.03 | — | — | — | — | 3 |
| 16 | <100 | — | 0.01 | 6 | 0.01 | 10 | >0.05 | 0.03 | 0.007 | 0.03 | 0.03 | 2 |
| 17 | <100 | — | 0.002 | 3 | 0.002 | — | 0.03 | 0.006 | 0.004 | 0.006 | 0.006 | 0.75 |
| 18 | 3.4 | 3 | 0.006 | — | 0.03 | — | >0.05 | >0.1 | >0.1 | — | — | 7.5 |
| 19 | 3.3 | 3.4 | 0.006 | — | 0.003 | — | 0.03 | 0.03 | 0.006 | 0.03 | 0.006 | 0.75 |
| 20 | >100 | — | 0.002 | — | 0.002 | — | 0.03 | 0.006 | 0.007 | 0.075 | 0.006 | 7.5 |

TABLE II ($LD_{50}$) continued

| Cmpd. No. | HF, µg | | BA | | 2—SM | | | TBW, % | | BAW, % | CL, % | Diabrotica, ppm (soil) |
|---|---|---|---|---|---|---|---|---|---|---|---|---|
| | C | F* | C, % | S, ppm | A, % | S, ppm | E, % | C | E | | | |
| 21 | <100 | — | 0.1 | 6 | 0.03 | — | >0.05 | 0.03 | 0.004 | 0.01 | 0.006 | 2 |
| 22 | <100 | — | 0.05 | 6 | 0.003 | — | 0.03 | 0.03 | 0.007 | 0.03 | 0.006 | 0.75 |
| 23 | <100 | — | 0.003 | 3 | 0.01 | — | 0.003 | 0.075 | 0.1 | 0.1 | 0.05 | 7.5 |
| 24 | <100 | — | 0.003 | 6 | 0.002 | — | 0.003 | <0.1 | 0.001 | 0.008 | 0.002 | 0.4 |
| 25 | <100 | — | 0.002 | 6 | 0.002 | — | 0.003 | 0.03 | 0.007 | 0.04 | 0.002 | 2 |
| 26 | >100 | — | <0.05 | — | 0.008 | — | 0.003 | <0.003 | <0.005 | 0.006 | <0.003 | 2 |
| 27 | <100 | — | 0.001 | 1 | 0.006 | — | 0.003 | 0.002 | 0.002 | 0.006 | 0.002 | 3 |
| 28 | <100 | — | 0.006 | 6 | 0.003 | — | 0.003 | 0.03 | 0.01 | 0.03 | 0.007 | 3 |
| 29 | <100 | — | 0.003 | 6 | 0.006 | — | 0.03 | 0.007 | 0.008 | 0.03 | 0.006 | 7.5 |
| 30 | <100 | — | 0.006 | — | 0.006 | — | 0.006 | >0.1 | >0.1 | — | — | >25 |
| 31 | <100 | — | 0.002 | — | 0.001 | — | 0.001 | 0.03 | >0.1 | 0.01 | 0.03 | 17 |
| 32 | <100 | — | 0.0006 | 1 | 0.0006 | — | 0.0003 | 0.03 | >0.1 | 0.03 | 0.006 | 2 |
| 33 | <100 | — | 0.001 | 2 | 0.003 | — | 0.03 | 0.08 | 0.03 | 0.1 | 0.08 | 7.5 |
| 34 | <100 | — | 0.006 | 6 | 0.002 | — | 0.006 | 0.006 | 0.006 | 0.03 | 0.006 | 2 |
| 35 | <100 | — | 0.003 | 3 | 0.0003 | — | 0.03 | 0.006 | 0.03 | 0.01 | 0.03 | 3 |
| 36 | 31 | 64 | 0.05 | — | 0.006 | — | 0.03 | >0.1 | 0.1 | — | — | >25 |
| 37 | 30 | 30 | <0.05 | — | 0.001 | — | 0.03 | 0.03 | 0.02 | 0.03 | 0.005 | 2 |
| 38 | >100 | — | — | — | >0.05 | — | >0.05 | 0.007 | 0.008 | 0.006 | 0.006 | 0.75 |
| 39 | 25 | 30 | 0.05 | 8 | 0.002 | — | 0.03 | 0.006 | 0.007 | 0.009 | 0.006 | 0.75 |
| 40 | 26 | 30 | — | — | 0.01 | — | 0.03 | 0.06 | 0.01 | 0.06 | 0.02 | 0.75 |

TABLE II ($LD_{50}$) continued

| Cmpd. No. | HF, µg | | BA | | 2—SM | | | TBW, % | | BAW, % | CL, % | Diabrotica, ppm (soil) |
|---|---|---|---|---|---|---|---|---|---|---|---|---|
| | C | F* | C, % | S, ppm | A, % | S, ppm | E, % | C | E | | | |
| 41 | 7.6 | 30 | — | — | 0.003 | — | 0.03 | 0.02 | 0.005 | 0.04 | 0.009 | 0.75 |
| 42 | 9 | 24 | — | — | 0.01 | — | 0.05 | 0.03 | 0.004 | 0.075 | 0.006 | 0.75 |
| 43 | 52 | — | — | — | 0.002 | — | 0.05 | 0.002 | 0.005 | 0.004 | 0.002 | 2 |
| 44 | >100 | — | — | — | 0.003 | — | 0.006 | 0.006 | 0.02 | 0.006 | <0.003 | 17 |
| 45 | 85 | — | — | — | 0.01 | — | 0.03 | <0.003 | 0.024 | 0.03 | 0.006 | 17 |
| 46 | 30 | 51 | 0.006 | 8 | <0.001 | — | 0.03 | 0.01 | <0.1 | 0.04 | 0.03 | 2 |
| 47 | >100 | — | 0.006 | — | 0.006 | — | >0.05 | <0.1 | >0.1 | — | — | <25 |
| 48 | 40 | — | 0.006 | — | 0.002 | — | 0.006 | 0.006 | 0.002 | 0.005 | 0.002 | 3 |
| 49 | 56 | — | 0.006 | — | 0.0006 | — | 0.0006 | 0.03 | 0.01 | 0.01 | 0.007 | 17 |
| 50 | 16 | <50— | 0.003 | 6 | 0.001 | — | 0.01 | <0.1 | 0.01 | | | 0.3 |
| 51 | <100 | — | 0.003 | — | 0.003 | — | 0.01 | 0.025 | 0.023 | 0.025 | 0.004 | 7.5 |
| 52 | <100 | — | <0.05 | — | <0.05 | — | <0.05 | <0.1 | <0.1 | | | |

Selected compounds were evaluated on three other insects — the aster leafhopper, German cockroach and lygus bug, by the following procedures.

*Aster Leafhopper* [*Macrosteles fascifrons* (Stal)]:

Oat seedlings (*Aena sp.*) were grown in a commercial potting soil in plastic cups. When the plants were approximately 10 cm tall they were thinned to 3 plants per cup and dipped for 2—3 seconds in 50—50 acetone-water solutions of the test compounds. When the plants had dried, a clear plastic tube was placed over them and the bottom end pressed into the cup. Ten aster leafhopper adults/nymphs were then placed in each tube and the tops of the tubes covered with white organdy cloth. Mortality counts were made after 48 hours. Test concentrations ranged from 0.05% downward. The LD—50 values are expressed below in Table III under the heading "LH" in terms of percent of the test compound in the solution.

*German Cockroach* [*Blatella germanica* (Linn.)]:

Test compounds were diluted in a 50—50 acetone-water solution. Two ml of the solution was sprayed through a hand spray gun into circular cardboard cages containing 10 one-month old German cockroach nymphs. The test cages were covered on the bottom with cellophane and on the top with tulle netting. Percent mortality was recorded 4 days later. Test concentrations ranged from 0.1% downward. The LD—50 values are expressed below in Table III under the heading "GR" in terms of percent of the test compound in the sprayed solution.

*Lygus Bug* [*Lygus hesperus* (Knight)]:

Test compounds were diluted in a 50—50 acetone-water solution. Two ml of the solution was sprayed through a hand spray gun into circular carboard cages containing one green bean pod and 10 adult lygus bugs. The test cages were covered on the bottom with cellophane and on the top with tulle netting. Percent mortality was recorded 48 hours later. Test concentrations ranged from 0.05% downward. The LD—50 values are expressed below in Table III under the heading "LB" in terms of percent of the test compound in the sprayed solution.

TABLE III
(LD—50)

| Compound No. | LH, % | GR, % | LB, % |
|---|---|---|---|
| 1 | — | 0.03 | 0.03 |
| 6 | 0.01 | — | — |
| 7 | 0.03 | 0.04 | 0.06 |
| 9 | 0.03 | 0.037 | 0.01 |
| 10 | 0.03 | — | — |
| 13 | 0.006 | >0.1 | 0.05 |
| 19 | 0.006 | 0.02 | 0.003 |

Soil Residual Control of Diabrotica

Test compounds showing good control of Diabrotica in the evaluation procedures were submitted for evaluation of residual control of this insect. Compounds 1, 3, 4, 5, 8 and 10 were evaluated at concentrations of 2 ppm in the soil. Other compounds were evaluated at concentrations of approximately twice the demonstrated LD—50 in the earlier tests.

Test compounds were incorporated into 200 g of soil at the indicated concentrations. The soils were maintained at a constant soil moisture in the greenhouse. At weekly intervals, 10-gram samples were taken and placed in a small cup. An indentation was made on the soil surface and approximately 50 Diabrotica eggs were added, covered with soil, and the cup covered. A piece of Romaine lettuce was added four days later. The cups were examined for live larvae one week later.

Table IV indicates the number of weeks of Diabrotica control (50% mortality) exhibited by test compounds at the indicated concentrations.

TABLE IV

| Compound No. | ppm | Control of Diabrotica, Weeks |
|---|---|---|
| 1 | 2 | 13 |
| 3 | 2 | 2 |
| 4 | 2 | 9 |
| 5 | 2 | 8 |
| 8 | 2 | 0 |
| 9 | 1.5 | <2 |
| 10 | 2 | 14 |
| 13 | 3 | 3 |
| 14 | 3 | 4 |
| 17 | 1.5 | 4 |
| 19 | 1.5 | <2 |
| 21 | 4 | 5 |
| 22 | 1.5 | <2 |
| 24 | 0.8 | <2 |
| 25 | 4 | 7 |
| 41 | 1.5 | 7 |
| 42 | 1.5 | 6 |

In practice, a pure compound can be used as an insecticide. However, in general, the compounds are first formulated with one or more inert (i.e. non-chemically reactive, plant compatible or herbicidally inert) carriers or diluents suitable for insecticidal use, before being applied.

The compositions or formulations, including a compound as described herein, may take any one of a number of solid or liquid forms. Examples of solid forms are dusts, granules, tablets, powders and the like. Examples of liquid forms are emulsions, solutions, suspensions, flowables, emulsifiable concentrates and pastes. Such compositions may contain, in addition to the active compound or compounds, various carriers or diluents; surface-active agents (wetting agents, dispersing agents and/or emulsifying agents); solvents (water, or organic solvents such as aromatic solvents or chlorinated aliphatic solvents); adhesives; thickeners; binders; anti-foaming agents; and other substances as mentioned herein.

Solid carriers or diluents included in such compositions or formulations may include, for example, ground natural minerals such as kaolins, alumina, calcium carbonate, silica, kieselguhr, clays, etc.; ground synthetic minerals such as various silicates and aluminosilicates and ground vegetable products such as bark, cornmeal, sawdust, cellulose powder and the like.

To manufacture solid compositions, the active substances are mixed with solid carriers of diluents such as those mentioned above and the mixture is ground to the appropriate size. Granules can be manufactured by dissolving an active compound in an organic solvent and applying the mixture, for example, by atomization, onto an absorptive granulated inert material, such as silica. Adhesives may be utilized to assist in the incorporation of the compound onto the solid particles.

Wettable powders and pastes are obtained by mixing and grinding an active compound with one or more dispersing agents and/or solid carriers or diluents. Also included may be wetting agents and/or dispersing agents, for example, lignins, methyl cellulose, naphthalenesulfonic acid derivatives, fatty alcohol sulfates and various types of alkali and alkaline earth metal salts of fatty acids.

Emulsifiable concentrations are generally obtained by dissolving the active compound in an organic solvent, for example, butanol, cyclohexanone, xylenes, or higher boiling aromatic hydrocarbons. To obtain suspensions or emulsions in water, wetting agents may also be added.

Flowables are prepared by mixing an active compound with one or more dispersing agents and/or

solid additives, and a liquid (which may be water or an organic solvent) in which the active compound is relatively insoluble and grinding the mixture.

Both liquid and solid compositions may be in microcapsule or encapsulated form, to permit release of the enclosed active compound at a controlled rate over a period of time. Liquid compositions of this type contain encapsulated droplets of approximately 1—50 microns in diameter, including the active compound and optionally a solvent. The encapsulating material is an inert porous membrane of a polymeric material.

Solid encapsulated compositions generally take the form of granules, in which the liquid containing the active component is trapped in the pores of the granular support by a porous polymeric membrane through which the active ingredient may migrate at a controlled rate, or which membrane breaks down at a controlled rate to permit escape of the active ingredient.

Typical encapsulating materials include natural and synthetic rubbers, cellulosic materials, styrenebutadiene copolymers, polyacrylonitriles, polyacrylates, polyamides, polyisocyanates, polyurethanes, mixed copolymers of the foregoing and starch xanthates.

It is possible to use highly concentrated liquid compositions containing up to about 95% by weight of the active compound, or even the 100% active compound alone, when applying the compound in the form of a finely divided liquid by use of various atomizing equipment, for example by airplane spraying techniques. For other purposes, however, the various types of compositions which can be utilized for these compounds will contain varying amounts of the compound according to the type of composition and the intended use.

In general, insecticidal compositions may contain from 5 to 95% of the active compound, more preferably from 10 to 85%. Some typical compositions will contain an active compound as follows: wettable powders: 25 to 80% active compound; oil suspensions, emulsions, solutions, flowables, and emulsifiable concentrates: 5 to 85% active compound; aqueous suspensions: 20 to 50% active compound, dusts and powders: 5 to 20% active compound; granules and pellets: 5 to 20% active compound.

In addition to the active compound and the various agents utilized in preparing compositions and formulations mentioned, such compositions may also contain one or more other active compounds of the type mentioned herein as well as other active pesticidal agent, such as herbicides, fungicides, insecticides, acaricides, nematocides, bactericides, and plant growth regulators. Such compounds may also contain soil disinfectants or fumigants and may further contain fertilizers, thus making it possible to provide multipurpose compositions containing one or more of the active compounds described herein as well as, optionally, other pesticides and also fertilizers, all intended and formulated for use at the same locus.

Control of insect pests is accomplished by applying a composition containing an insecticidally effective amount of an active compound as described herein to the insect, to a locus at which insecticidal control is desired, or to food sources (including seeds) on which the insects feed. For use in the last mentioned manner it is preferable to utilize a compound which is not volatile. Thus, control may be achieved by direct application of the active compounds to the insects and indirectly by application of the compounds to a locus to be protected (such as crop lands, grass ranges and forests), to a source of food for insects or to other insect habitats (for example, breeding or swarming areas). The rates of application of the active compound, and the concentration applied, will vary according to whether the compound or composition is being directly applied to the insect or indirectly, to a locus, food or habitat. In the latter case the rate of the application, depending on the nature of the insect or insects to be controlled, and the plant environment, will generally vary from about 0.01 to about 100 pounds per acre (about 0.011 to about 112 kg/ha).

It should be noted that the active compound need not be insecticidally active per se to effect insect control. The purposes of this invention are fully served if such compounds are rendered active by external influences, such as light or heat, or by same physiological action which occurs when the compound is ingested into the body of the insect.

Compositions containing one or more of the active compounds described, in an insecticidally effective amount, may be applied to the plant, locus or insect habitat in any conventional manner.

When used in connection with crop or other plant protection, application may be made in a preventive (i.e. before infestation) or eradicative manner (i.e., after infestation). Thus, powers and various liquid compositions containing the active compound can be applied by the use of power dusters, boom and hand sprayers and spray dusters, or applied from airplanes as dusts or sprays. When applied in the latter method they may be effective in very low dosages.

Compositions including active compound may also be applied by addition to irrigation waters supplied to the field to be treated. This method of application permits penetration of the compounds into the soil as the water is absorbed therein.

Compositions including active compounds may additionally be used to protect plant seeds from being attacked by soil-borne insects pests after planting and during germination, by applying the composition to the seeds as a seed dressing. This is performed generally by mixing the seeds with an active composition in either liquid or solid form (preferably liquid) in a suitable mixing apparatus. Liquid compositions for this purpose may contain an adhesive or sticking agent, such as methyl cellulose, ethyl cellulose, etc., to assist the composition in adhering to the seed. If a solid composition is utilized for this purpose, an adhesive agent may be sprayed on the seeds during or after mixing.

For use as a soil insecticide, the active compound, or compositions containing it, may be mixed with the soil in any conventional manner, before, during or after planting of the plant seeds. Liquid

compositions may be applied by spraying onto the surface or by incorporation in irrigation or sprayed water. Solid or liquid compositions containing an active compound may be incorporated into the soil prior to or during planting by discing, plowing or other mixing operations, in order to locate the active ingredient below the surface of the soil so as to be most effective in controlling undesirable larvae.

Solid compositions of insecticides, including organophosphorus insecticides, often include a clay (as diluent or as granular support). However, a number of clays are known to accelerate the decomposition of the insecticide. Such clays include various forms of diatomaceous earth. For this reason, such compositions usually also contain a stabilizer, such as a glycol or glycol ether, usually in an amount of about 5% by weight of the composition. For instance, U.S. patent 4,313,941 describes certain compositions of the insecticide O-ethyl-S,S-dipropyl dithiophosphate and points out that compositions on which this substance is supported on clays should also include about 5% by weight of propylene glycol.

The stabilization of such compositions is particularly important for storage stability of such insecticidal formulations. It is quite common for such formulated materials to be stored for one or even two years before used for crop protection. Additionally, decomposition of the insecticide can occur when it is incorporated into very warm soil, or when soil becomes heated after the insecticide has been incorporated.

An additional feature of this invention is the provision of new forms of stabilized solid compositions for the new compounds which employ calcined diatomaceous earth as the solid support or diluent, and triethylene glycol, tetraethylene glycol, or a $C_4$—$C_8$ alkanediol as the stabilizer.

The physical form of the diatomaceous earth will vary with the type of solid composition. For granular compositions an agglomerated or granular form will be used; for others, a powered form.

The stabilizer is employed in an amount of about 1—10% by weight of the composition, preferably about 3—8% by weight and most preferably, about 5%.

The specific stabilizers which are effective for use with the new compounds described herein, when supported on calcined diatomaceous earth, are triethylene glycol, tetraethylene glycol and $C_4$—$C_8$ alkanediols. Examples of the latter are 1,5-pentanediol; 2,4-pentanediol; 2-ethyl-1,3-hexanediol and 2,5-hexanediol. Some related compounds, such as diethylene glycol, were found to have little or no effect as stabilizers for these insecticides in combination with calcined diatomaceous earth.

To demonstrate the advantageous properties possessed by such compositions, a granular material was prepared. The test insecticide was Compound 1.

The composition was prepared as follows: 10 grams (g) of Compound 1 was mixed with 5 g triethylene glycol. The mixture was then sprayed onto 85 g of calcined diatomaceous earth agglomerate in a tumbler-type blender, then blended for 15—30 minutes and dried. The premixing step is not essential; the insecticide and stabilizer may be separately sprayed onto the support.

The granular composition thus prepared had the following composition:

| Ingredient | Weight Percent |
|---|---|
| Compound 1 | 10 |
| triethylene glycol | 5 |
| calcined diatomaceous earth agglomerate | 85 |

A similar granular material was prepared for comparative purposes, which contained 10% by weight of the same insecticide and 90% by weight of the agglomerate. This material did not contain the triethylene glycol stabilizer.

Thermal Stability

The two granular compositions were submitted to differential thermal analysis using a differential scanning calorimeter. These tests indicated that the granule which did not contain triethylene glycol began to thermally decompose at about 90°C while the granule prepared according to the invention did not decompose at the temperature, but only showed decomposition at a much higher temperature, about 150°C. Tests of the insecticide alone showed that decomposition commenced at about 110°C.

Storage Stability Tests

The storage stability of granular materials according to this invention was tested by storing the granules (both those including and those not including the triethylene glycol) for one month in an oven maintained at a temperature of 125°F. Two samples of technical grade insecticide were also submitted to this test. A storage test of this type is considered to simulate actual storage under ordinary conditions for approximately 3 years. The samples were analyzed before and after the test to determine the content of the insecticide.

The analyses revealed the following:
degradation of technical grade insecticide — 0.73—4.4%
degradation of composition according to the invention (including triethylene glycol) — 4%
degradation of composition not including triethylene glycol — 94%

While the thermal stability tests were conducted at temperatures in excess of those to which the insecticide would normally be exposed, these tests are considered to provide a reliable indication of the relative stability of such compositions in general. The storage stability tests confirmed this indication.

Some examples of other types of compositions containing the active compounds of this invention are:

Composition A: Wettable Powder

| Component | Weight % |
|---|---|
| Compound 1 | 80 |
| wetting agent (sodium dialkyl-naphthalene sulfonate) | 1 |
| dispersing agent (sodium lignosulfonate) | 4 |
| diluent (aluminum magnesium silicate) | 15 |
| Total | 100% |

Composition B: Dilute Solution

| Component | Weight % |
|---|---|
| Compound 10 | 5 |
| solvent (xylene) | 95 |
| Total | 100% |

Composition C: Emulsifiable Concentrate

| Component | Weight % |
|---|---|
| Compound 18 | 50 |
| Emulsifier (blend of metal sulfonates and polyoxyethylene ethers) | 10 |
| solvent (xylene) | 40 |
| Total | 100% |

## Claims

1. A compound having the formula

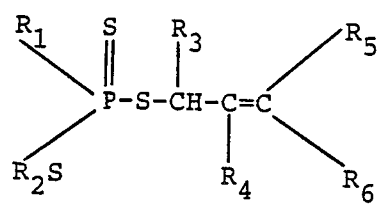

in which

$R_1$ is methyl or ethyl;
$R_2$ is $C_4$—$C_6$ branched alkyl or $C_5$—$C_6$ cycloalkyl;
$R_3$ is hydrogen, methyl or ethyl;
$R_4$ is hydrogen, $C_1$—$C_4$ alkyl, phenyl, halogen or halo-($C_1$—$C_4$ alkyl); and
$R_5$ and $R_6$ are hydrogen, halogen, $C_1$—$C_4$ alkyl or phenyl; or
$R_3$ and $R_5$ taken together form a trimethylene ring; provided that:
(a) if $R_3$, $R_5$ and $R_6$ are each hydrogen, then $R_4$ is not hydrogen;
(b) if $R_4$ is hydrogen, then $R_5$ and $R_6$ are not both $C_1$—$C_4$ alkyl; and
(c) if $R_4$ is halogen, then $R_5$ and $R_6$ are hydrogen, halogen or phenyl.

2. A compound according to Claim 1 in which $R_3$ is hydrogen.

3. A compound according to Claim 1 in which $R_3$, $R_5$ and $R_6$ are all hydrogen.

4. A compound according to Claim 1 in which $R_3$ is hydrogen, $R_4$ is $C_1$—$C_4$ alkyl, halogen or phenyl, and $R_5$ and $R_6$ are hydrogen or halogen, or $R_3$ and $R_5$ taken together form a trimethylene group, provided that if $R_4$ is halogen, then $R_5$ and $R_6$ are hydrogen, halogen or phenyl.

5. A compound according to Claim 1 in which $R_2$ is α, α-doubly branched $C_4$—$C_6$ alkyl, $R_3$ is hydrogen, $R_4$ is $C_1$—$C_3$ alkyl or halogen, and $R_5$ and $R_6$ are both hydrogen.

6. A compound according to Claim 5 in which $R_4$ is methyl.

7. A compound according to Claim 5 in which $R_4$ is chloro.

8. A compound according to Claim 4 in which $R_5$ and $R_6$ are both halogen.

9. A compound according to Claim 1 in which:

$R_3$ is hydrogen;

$R_4$ is hydrogen, phenyl or halogen; and

$R_5$ and $R_6$ are $C_1$—$C_4$ alkyl, halogen, phenyl or hydrogen; provided that: $R_3$, $R_5$ and $R_6$ are each hydrogen, then $R_4$ is not hydrogen

(a) if $R_4$ is hydrogen, then $R_5$ and $R_6$ are not both hydrogen;

(b) if $R_4$ is hydrogen, then $R_5$ and $R_6$ are not both $C_1$—$C_4$ alkyl; and

(c) if $R_4$ is halogen, $R_5$ and $R_6$ are hydrogen, halogen or phenyl.

10. A compound according to Claim 9 in which:

$R_4$ is hydrogen,

$R_5$ is hydrogen, halogen, phenyl or $C_1$—$C_4$ alkyl; and

$R_6$ is halogen, phenyl, or $C_1$—$C_4$ alkyl;

provided that $R_5$ and $R_6$ are not both $C_1$—$C_4$ alkyl.

11. A compound according to Claim 1 in which $R_1$ is ethyl, $R_2$ is tertiary butyl, $R_3$ is hydrogen, $R_4$ is methyl, and $R_5$ and $R_6$ are both hydrogen.

12. A compound according to Claim 1 in which $R_1$ is methyl, $R_2$ is tertiary butyl, $R_3$ is hydrogen, $R_4$ is methyl, and $R_5$ and $R_6$ are both hydrogen.

13. A compound according to Claim 1 in which $R_1$ is ethyl, $R_2$ is tertiary butyl, $R_3$ is hydrogen, $R_4$ is bromo, and $R_5$ and $R_6$ are both hydrogen.

14. A compound according to Claim 1 in which $R_1$ is ethyl, $R_2$ is tertiary butyl, $R_3$ is hydrogen, $R_4$ is chloro, and $R_5$ and $R_6$ are both hydrogen.

15. A compound according to Claim 1 in which $R_1$ is ethyl, $R_2$ is 1,1-dimethylpropyl, $R_3$ is hydrogen, $R_4$ is chloro, and $R_5$ and $R_6$ are both hydrogen.

16. A compound according to Claim 1 in which $R_1$ is ethyl, $R_2$ is 1,1-dimethylpropyl, $R_3$ is hydrogen, $R_4$ is methyl, and $R_5$ and $R_6$ are both hydrogen.

17. A compound according to Claim 1 in which $R_1$ is ethyl, $R_2$ is tertiary butyl, $R_3$ is hydrogen, $R_4$ is fluoro, and $R_5$ and $R_6$ are both hydrogen.

18. A compound according to Claim 1 in which $R_1$ is methyl, $R_2$ is tertiary butyl, $R_3$ is hydrogen and $R_4$, $R_5$ and $R_6$ are all chloro.

19. A compound according to Claim 1 in which $R_1$ is ethyl, $R_2$ is tertiary butyl, $R_3$ and $R_4$ are both hydrogen, $R_5$ is methyl, and $R_6$ is chloro.

20. A compound according to Claim 1 in which $R_1$ is ethyl, $R_2$ is tertiary butyl, $R_3$ is hydrogen, $R_4$ is phenyl, and $R_5$ and $R_6$ are both hydrogen.

21. A insecticidal composition comprising

(a) an insecticidally effective amount of a compound as defined in Claim 1; and

(b) an insecticidally suitable inert diluent or carrier.

22. A composition according to Claim 21 in which the inert carrier or diluent comprises:

(c) between about 1 and about 10% by weight of a stabilizer selected from the group consisting of triethylene glycol, tetraethylene glycol and $C_4$—$C_8$ alkanediols; and

(d) the remainder comprising calcined diatomaceous earth agglomerate.

23. A insecticidal composition according to any of Claims 21—22 in which $R_1$ is ethyl, $R_2$ is tertiary butyl, $R_3$ is hydrogen, $R_4$ is methyl, and $R_5$ and $R_6$ are both hydrogen.

24. A insecticidal composition according to any of Claims 21—23 in the form of granules, comprising 5—20% by weight of ingredient (a).

25. A insecticidal composition according to any of Claims 21—23 in the form of a wettable powder, containing from about 20 to about 80% by weight of ingredient (a).

26. A method for inhibiting or controlling insects comprising applying to an insect, the locus of an insect, or a locus at which insecticidal control is desired, an insecticidally effective amount of a compound or composition according to any of Claims 1—25.

27. A method of protecting crops from attack by soil-borne insects, comprising applying to the soil in which said crops are grown an insecticidally effective amount of a compound or composition according to any of claims 1—25.

28. A compound according to Claim 27 in which the insect from which crops are to be protected is of the genus *Diabrotica*.

**Patentansprüche**

1. Verbindung der Formel

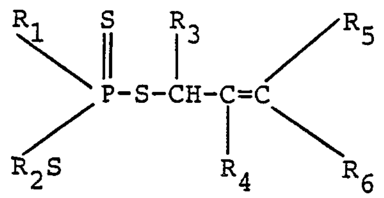

worin

$R_1$ Methyl oder Ethyl bedeutet;
$R_2$ verzweigtes $C_4$—$C_6$-Alkyl oder $C_5$—$C_6$-Cycloalkyl bedeutet;
$R_3$ Wasserstoff, Methyl oder Ethyl bedeutet;
$R_4$ Wasserstoff, $C_1$—$C_4$-Alkyl, Phenyl, Halogen oder Halo($C_1$—$C_4$-alkyl) bedeutet; und
$R_5$ und $R_6$ Wasserstoff, Halogen, $C_1$—$C_4$-Alkyl oder Phenyl bedeutet; oder worin
$R_3$ und $R_5$ zusammen einen Trimethylenring bilden, mit der Maßgabe, daß
(a) wenn $R_3$, $R_5$ und $R_6$ je Wasserstoff bedeuten, $R_4$ nicht Wasserstoff bedeutet;
(b) wenn $R_4$ Wasserstoff bedeutet, $R_5$ und $R_6$ nicht beide $C_1$—$C_4$-Alkyl bedeuten;
und
(c) wenn $R_4$ Halogen bedeutet, $R_5$ und $R_6$ Wasserstoff, Halogen oder Phenyl bedeuten.

2. Verbindung nach Anspruch 1, worin $R_3$ Wasserstoff bedeutet.

3. Verbindung nach Anspruch 1, worin $R_3$, $R_5$ und $R_6$ alle Wasserstoff bedeuten.

4. Verbindung nach Anspruch 1, worin $R_3$ Wasserstoff, $R_4$ $C_1$—$C_4$-Alkyl, Halogen oder Phenyl und $R_5$ und $R_6$ Wasserstoff oder Halogen bedeuten oder worin $R_3$ und $R_5$ zusammen eine Trimethylengruppe bilden, mit der Maßgabe, daß, wenn $R_4$ Halogen bedeutet, $R_5$ und $R_6$ Wasserstoff, Halogen oder Phenyl bedeuten.

5. Verbindung nach Anspruch 1, worin $R_2$ α,α-doppelverzweigtes $C_4$—$C_6$-Alkyl, $R_3$ Wasserstoff, $R_4$ $C_1$—$C_3$-Alkyl oder Halogen bedeuten und $R_5$ und $R_6$ beide Wasserstoff bedeuten.

6. Verbindung nach Anspruch 5, worin $R_4$ Methyl bedeutet.

7. Verbindung nach Anspruch 5, worin $R_4$ Chlor bedeutet.

8. Verbindung nach Anspruch 4, worin $R_5$ und $R_6$ beide Halogen bedeuten.

9. Verbindung nach Anspruch 1, worin
$R_3$ Wasserstoff,
$R_4$ Wasserstoff, Phenyl oder Halogen, und
$R_5$ und $R_6$ $C_1$—$C_4$-Alkyl, Halogen, Phenyl oder Wasserstoff bedeuten, vorausgesetzt, daß,
wenn $R_3$, $R_5$ und $R_6$ je Wasserstoff bedeuten, $R_4$ nicht Wasserstoff bedeutet,
(a) wenn $R_4$ Wasserstoff bedeutet, $R_5$ und $R_6$ nicht beide Wasserstoff bedeuten,
(b) wenn $R_4$ Wasserstoff bedeutet, $R_5$ und $R_6$ nicht beide $C_1$—$C_4$-Alkyl bedeuten, und
(c) wenn $R_4$ Halogen bedeutet, $R_5$ und $R_6$ Wasserstoff, Halogen oder Phenyl bedeuten.

10. Verbindung nach Anspruch 9, worin
$R_4$ Wasserstoff,
$R_5$ Wasserstoff, Halogen, Phenyl oder $C_1$—$C_4$-Alkyl und
$R_6$ Halogen, Phenyl oder $C_1$—$C_4$-Alkyl bedeuten, vorausgesetzt, daß $R_5$ und $R_6$ nicht beide $C_1$—$C_4$-Alkyl bedeuten.

11. Verbindung nach Anspruch 1, worin $R_1$ Ethyl, $R_2$ tert.-Butyl, $R_3$ Wasserstoff, $R_4$ Methyl und $R_5$ und $R_6$ beide Wasserstoff bedeuten.

12. Verbindung nach Anspruch 1, worin $R_1$ Methyl, $R_3$ tert.-Butyl, $R_3$ Wasserstoff, $R_4$ Methyl und $R_5$ und $R_6$ beide Wasserstoff bedeuten.

13. Verbindung nach Anspruch 1, worin $R_1$ Ethyl, $R_2$ tert.-Butyl, $R_3$ Wasserstoff, $R_4$ Brom und $R_5$ und $R_6$ beide Wasserstoff bedeuten.

14. Verbindung nach Anspruch 1, worin $R_1$ Ethyl, $R_2$ tert.-Butyl, $R_3$ Wasserstoff, $R_4$ Chlor und $R_5$ und $R_6$ beide Wasserstoff bedeuten.

15. Verbindung nach Anspruch 1, worin $R_1$ Ethyl, $R_2$ 1,1-Dimethylpropyl, $R_3$ Wasserstoff, $R_4$ Chlor und $R_5$ und $R_6$ beide Wasserstoff bedeuten.

16. Verbindung nach Anspruch 1, worin $R_1$ Ethyl, $R_2$ 1,1-Dimethylpropyl, $R_3$ Wasserstoff, $R_4$ Methyl und $R_5$ und $R_6$ beide Wasserstoff bedeuten.

17. Verbindung nach Anspruch 1, worin $R_1$ Ethyl, $R_2$ tert.-Butyl, $R_3$ Wasserstoff, $R_4$ Fluor und $R_5$ und $R_6$ beide Wasserstoff bedeuten.

18. Verbindung nach Anspruch 1, worin $R_1$ Methyl, $R_2$ tert.-Butyl, $R_3$ Wasserstoff, und $R_4$, $R_5$ und $R_6$ alle Chlor bedeuten.

19. Verbindung nach Anspruch 1, worin $R_1$ Ethyl, $R_2$ tert.-Butyl, $R_3$ und $R_4$ beide Wasserstoff, $R_5$ Methyl und $R_6$ Chlor bedeuten.

20. Verbindung nach Anspruch 1, worin $R_1$ Ethyl, $R_2$ tert.-Butyl, $R_3$ Wasserstoff, $R_4$ Phenyl und $R_5$ und $R_6$ beide Wasserstoff bedeuten.

21. Insekten vernichtendes Mittel, dadurch gekennzeichnet, daß es

(a) eine Insekten vernichtend wirksame Menge einer Verbindung nach Anspruch 1 und

(b) ein für ein Insekten vernichtendes Mittel geeignetes inertes Verdünnungsmittel oder Träger enthält.

22. Mittel nach Anspruch 21, dadurch gekennzeichnet, daß der inerte Träger oder das Verdünnungsmittel

(c) zwischen etwa 1 und etwa 10 Gewichtsprozent eines Stabilisators, ausgewählt aus der Gruppe Triethylenglykol, Tetraethylenglykol und $C_4$—$C_8$-Alkandiole, und

(d) als Rest ein Agglomerat aus calcinierter Diatomeenerde enthält.

23. Insekten vernichtendes Mittel nach einem der Ansprüche 21 bis 22, dadurch gekennzeichnet, daß $R_1$ Ethyl, $R_2$ tert.-Butyl, $R_3$ Wasserstoff, $R_4$ Methyl und $R_5$ und $R_6$ beide Wasserstoff bedeuten.

24. Insekten vernichtendes Mittel nach einem der Ansprüche 21 bis 23, dadurch gekennzeichnet, daß es in Granulatform vorliegt und 5 bis 20 Gewichtsprozent des Bestandteils (a) enthält.

25. Insekten vernichtendes Mittel nach einem der Ansprüche 21 bis 23, dadurch gekennzeichnet, daß es in Form eines benetzbaren Pulvers vorliegt und von etwa 20 bis etwa 80 Gewichtsprozent des Bestandteils (a) enthält.

26. Verfahren zur Inhibierung oder Kontrolle von Insekten, dadurch gekennzeichnet, daß man auf das Insekt, den Ort des Insekts oder einen Ort, wo die Insektenkontrolle gewünscht wird, eine insektizid wirksame Menge einer Verbindung oder des Mittels nach einem der Ansprüche 1 bis 25 anwendet.

27. Verfahren zum Schutz von Nutzpflanzen vor dem Angriff durch im Boden geborene Insekten, dadurch gekennzeichnet, daß man auf den Boden, wo solche Nutzpflanzen gezüchtet werden, eine insektizid wirksame Menge einer Verbindung oder eines Mittels nach einem der Ansprüche 1 bis 25 anwendet.

28. Verfahren nach Anspruch 27, dadurch gekennzeichnet, daß das Insekt, vor dem die Nutzpflanzen geschützt werden sollen, zu dem Genus *Diabrotica* gehört.

**Revendications**

1. Un dérivé de formule

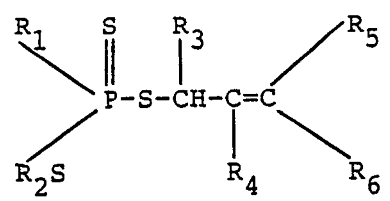

dans laquelle

$R_1$ représente un radical méthyle ou éthyle;

$R_2$ représente un radical alkyle ramifié en $C_4$ à $C_6$ ou cycloalkyle en $C_5$ à $C_6$;

$R_3$ représente un atome d'hydrogène, un radical méthyle ou éthyle;

$R_4$ représente un atome d'hydrogène, un radical alkyle en $C_1$ à $C_4$, phényle, un atome d'halogène ou un radical haloalkyle en $C_1$ à $C_4$; et

$R_5$ et $R_6$ représente un atome d'hydrogène, d'halogène, un radical alkyle en $C_1$ à $C_4$ ou phényle; ou

$R_3$ et $R_5$ pris ensemble forment un cycle triméthylène; pourvu que:

a) si $R_3$, $R_5$ et $R_6$ représentent chacun un atome d'hydrogène, alors $R_4$ ne représente pas un atome d'hydrogène;

b) si $R_4$ représente un atome d'hydrogène, alors $R_5$ et $R_6$ ne représentent pas tous les deux un radical alkyle en $C_1$ à $C_4$; et

c) si $R_4$ représente un atome d'hydrogène, alors $R_5$ et $R_6$ représentent un atome d'hydrogène, d'halogène ou un radical phényle.

2. Un dérivé selon la revendication 1, dans lequel $R_3$ représente un atome d'hydrogène.

3. Un dérivé selon la revendication 1, dans lequel $R_3$, $R_5$ et $R_6$ représentent tous un atome d'hydrogène.

4. Un dérivé selon la revendication 1, dans lequel $R_3$ représente un atome d'hydrogène, $R_4$ représente un radical alkyle en $C_1$ à $C_4$, un atome d'halogène ou un radical phényle, et $R_5$ et $R_6$ représentent un atome d'hydrogène ou d'halogène, ou $R_3$ et $R_5$ pris ensemble forment un groupe triméthylène pourvu que si $R_4$ est un halogène, alors $R_5$ et $R_6$ représentent un atome d'hydrogène, d'halogène ou le radical phényle.

5. Un dérivé selon la revendication 1, dans lequel $R_2$ représente un radical alkyle en $C_4$ à $C_6$ doublement ramifié, $R_3$ représente un atome d'hydrogène, $R_4$ représente un radical alkyle en $C_1$ à $C_3$ ou un atome d'halogène, et $R_5$ et $R_6$ représentent tous les duex un atome d'hydrogène.

6. Un dérivé selon la revendication 5, dans lequel $R_4$ représente un radical méthyle.

7. Un dérivé selon la revendication 5, dans lequel $R_4$ représente un atome de chlore.

8. Un dérivé selon la revendication 4, dans lequel $R_5$ et $R_6$ représentent tous les duex un atome d'halogène.

9. Un dérivé selon la revendication 1, dans lequel:

$R_3$ représente un atome d'hydrogène;

$R_4$ représente un atome d'hydrogène, un radical phényle ou un atome d'halogène;

pourvu que:

a) si $R_3$, $R_5$ et $R_6$ représentent chacun un atome d'hydrogène, alors $R_4$ ne représente pas un atome d'hydrogène;

b) si $R_4$ représente un atome d'hydrogène, alors, $R_5$ et $R_6$ ne représentent pas tous les deux un radical alkyle en $C_1$ à $C_4$; et

c) si $R_4$ représente un atome d'halogène, $R_5$ et $R_6$ représentent un atome d'hydrogène, d'halogène ou le radical phényle.

10. Un dérivé selon la revendication 9, dans lequel:

$R_4$ représente un atome d'hydrogène,

$R_5$ représente un atome d'hydrogène, d'halogène, un radical phényle ou alkyle en $C_1$ à $C_4$; et

$R_6$ représente un atome d'halogène, un radical phényle, ou alkyle en $C_1$ à $C_4$.

11. Un dérivé selon la revendication 1, dans lequel $R_1$ représente un radical éthyle, $R_2$ représente un radical butyle tertiaire, $R_2$ représente un atome d'hydrogène, $R_4$ représente un radical méthyle, et $R_5$ et $R_6$ représentent tous les deux un atome d'hydrogène.

12. Un dérivé selon la revendication 1, dans lequel $R_1$ représente un radical méthyle, $R_2$ représente un radical butyle tertiaire, $R_3$ représente un atome d'hydrogène, $R_4$ représente un radical méthyle, et $R_5$ et $R_6$ représentent tous les deux un atome d'hydrogène.

13. Un dérivé selon la revendication 1, dans lequel $R_1$ représente un radical éthyle, $R_2$ représente un radical butyle tertiaire, $R_3$ représente un atome d'hydrogène, $R_4$ représente un atome de brome et $R_5$ et $R_6$ représentent tous les deux un atome d'hydrogène.

14. Un dérivé selon la revendication 1, dans lequel $R_1$ représente un radical éthyle, $R_2$ représente un radical buyyle tertiaire, $R_3$ représente un atome d'hydrogène, $R_4$ représente un atome de chlore, et $R_5$ et $R_6$ représentent tous les deux un atome d'hydrogène.

15. Un dérivé selon la revendication 1, dans lequel $R_1$ représente un radical éthyle, $R_2$ représente un radical 1,1-dimethylpropyle, $R_3$ représente un atome d'hydrogène, $R_4$ représente un atome de chlore, et $R_5$ et $R_6$ représentent tous les deux un atome d'hydrogène.

16. Un dérivé selon la revendication 1, dans lequel $R_1$ représente un radical éthyle, $R_2$ représente un radical 1,1-dimethylpropyle, $R_3$ représente un atome d'hydrogène, $R_4$ représente un radical méthyle, et $R_5$ et $R_6$ représentent tous les deux un atome d'hydrogène.

17. Un dérivé selon la revendication 1, dans lequel $R_1$ représente un radical éthyle, $R_2$ représente un radical butyle tertiaire, $R_3$ représente un atome d'hydrogène, $R_4$ représente un atome de fluor, et $R_5$ et $R_6$ représentent tous les deux un atome d'hydrogène.

18. Un dérivé selon la revendication 1, dans lequel $R_1$ représente un radical méthyle, $R_2$ représente un radical butyle tertiaire, $R_3$ représente un atome d'hydrogène, $R_4$, $R_5$ et $R_6$ représentent tous un atome de chlore.

19. Un dérivé selon la revendication 1, dans lequel $R_1$ représente un radical butyle tertiaire, $R_3$ et $R_4$ représentent tous le deux un atome d'hydrogène, $R_5$ représente un radical méthyle, et $R_6$ représente un atome de chlore.

20. Un dérivé selon la revendication 1, dans lequel $R_1$ représente un radical éthyle, $R_2$ représente un radical butyle tertiaire, $R_3$ représente un atome d'hydrogène, $R_4$ représente un radical phényle, et $R_5$ et $R_6$ représentent tous les deux un atome d'hydrogène.

21. Une composition insecticide comprenant

a) une quantité efficace en tant qu'insecticide d'un dérivé selon la revendication 1; et

b) un diluant ou support inerte convenant à un insecticide.

22. Une composition selon la revendication 21, dans laquelle le support ou diluent inerte comprend:

c) entre environ 1 et environ 10% en poids d'un stabilisant choisi dans le groupe constitué par: triéthylène glycol, tétraéthylène glycol et les alkanediols en $C_4$ à $C_8$; et

d) le reste comprenant un agglomérat de terre de diatomées calcinée.

23. Une composition insecticide selon l'une quelconque des revendications 21 et 22, dans lequelle $R_1$ représente un radical éthyle, $R_2$ représente un radical butyle tertiaire, $R_3$ représente un atome d'hydrogène, $R_4$ représente un radical méthyle, et $R_5$ et $R_6$ représentent tous les deux un atome d'hydrogène.

24. Une composition insecticide selon l'une quelconque des revendications 21 à 23, sous la forme de granulés, comprenant de 5 à 20% en poids d'ingrédient a).

25. Une composition insecticide selon l'une quelconque des revendications 21 à 23, sous la forme d'une poudre mouillable, contenant d'environ 20 à environ 80% en poids d'ingrédient a).

26. Une méthode d'inhibition ou de contrôle d'insectes consistant à appliquer à un insecte, à l'habitat d'un insecte, ou au lieu où l'on souhaite une maîtrise insecticide, une quantité efficace en tant qu'insecticide d'un dérivé ou d'une composition selon l'une quelconque des revendications 1 à 25.

27. Une méthode de protection de récoltes contre l'attaque d'insectes nés dans un sol, consistant à appliquer au sol où poussent ces récoltes une quantité efficace en tant qu'insecticide d'un dérivé ou d'une composition selon l'une quelconque des revendications 1 à 25.

28. Une méthode selon la revendication 27, dans laquelle l'insecte contre lequel on doit protéger les récoltes appartient au genre *diabrotica*.